# FASCICULE DE BREVET EUROPEEN

(11) **EP 2 289 009 B1**
(45) Date de publication et mention de la délivrance du brevet: **27.02.2019**
(21) Numéro de dépôt: 09766007.0
(22) Date de dépôt: 12.06.2009
(51) Int. Cl.: G06F 17/30

(54) **DISPOSITIF D'AIDE A LA RECONNAISSANCE D'IMAGES AMELIORE**
VERBESSERTE HILFSVORRICHTUNG ZUR BILDERKENNUNG
IMPROVED ASSISTANCE DEVICE FOR IMAGE RECOGNITION

(30) Priorité: 16.06.2008 FR 0803345
(43) Date de publication de la demande: 02.03.2011
(73) Titulaire: INRIA - Institut National de Recherche en Informatique et en Automatique, 78150 Le Chesnay (FR)
(72) Inventeur: JEGOU, Hervé, 35235 THORIGNE-FOUILLARD (FR); SCHMIDT, Cordelia, F-38330 Saint Ismier (FR); DOUZE, Matthijs, F-38400 Saint Martin d'Hères (FR)
(74) Mandataire: Cabinet Netter
(86) Numéro de dépôt international: PCT/FR2009/000702
(87) Numéro de publication internationale: WO 2009/153445

(56) Documents cités:
- WO-A-02/25588
- ALEXIS JOLY ET AL: "Content-Based Copy Retrieval Using Distortion-Based Probabilistic Similarity Search" IEEE TRANSACTIONS ON MULTIMEDIA, IEEE SERVICE CENTER, PISCATAWAY, NJ, US, vol. 9, no. 2, 1 février 2007 (2007-02-01), pages 293-306, XP011157474 ISSN: 1520-9210
- HEIDEMANN ET AL: "Unsupervised image categorization" IMAGE AND VISION COMPUTING, GUILDFORD, GB, vol. 23, no. 10, 20 septembre 2005 (2005-09-20), pages 861-876, XP005029245 ISSN: 0262-8856
- David G. Lowe: "Distinctive Image Features from Scale-Invariant Keypoints", International Journal of Computer Vision, vol. 60, no. 2, 5 January 2004 (2004-01-05), pages 91-110, XP055203065, ISSN: 0920-5691, DOI: 10.1023/B:VISI.0000029664.99615.94

## Description

L'invention a trait à un dispositif d'aide à la reconnaissance d'images.

Une première fonction de tels dispositifs est généralement de rechercher des images similaires dans une base de données, soit deux-à-deux, par exemple pour supprimer des doublons dans cette base, soit à partir d'une image requête, par exemple pour rechercher des images représentant le même sujet que l'image requête.

"Par images similaires", on entend ici des images représentant le même objet ou la même scène, dans des conditions de prise de vue potentiellement différentes. Cette définition couvre notamment les images modifiées de manière synthétique, par exemple par une opération de compression ou une attaque de filtrage malicieuse.

De multiples applications peuvent être envisagées, telles que, par exemple, l'identification d'objets volés sur des sites d'enchères en ligne, le tri de lots de photographies, l'identification de contrefaçons de modèles ou images.

Une seconde fonction de ces dispositifs est d'évaluer la ressemblance de deux images similaires, en particulier pour ordonner les images-résultats selon leur pertinence.

De multiples technologies existent.

La plupart de ces technologies, les plus récentes au moins, sont basées sur l'utilisation de descripteurs locaux, caractérisant des zones plus particulièrement intéressantes d'une image.

De plus amples informations sur la détection de ces zones d'intérêt et sur la génération de descripteurs s'y rapportant peuvent être trouvées dans le document [1] : Lowe. D, "Distinctive image features from scale-invariant keypoints", IJCV, 60, (2004) 91-110 . La comparaison et/ou la recherche d'images revient alors à comparer des descripteurs locaux entre eux, ce qui est plus fin qu'une comparaison directe de fichiers informatiques entre eux ou qu'une comparaison des images sur la base de descripteurs globaux.

Avec le temps, les bases de données mémorisent des quantités de plus en plus importantes d'images. Leur utilisation s'est également largement développée, en particulier grâce à Internet.

Autrement dit, la recherche d'images similaires implique des opérations de comparaison sans cesse plus nombreuses. Et en pratique, ce nombre est si important qu'il rend impossible la mise en oeuvre de dispositifs basés sur des comparaisons directes de descripteurs entre eux.

Le document [5] : Sivic, J. and Zisserman, A., "Video Google: A Text Retrieval Approach to Object Matching in Videos", in ICCV (2003), propose de réaliser une correspondance entre les descripteurs et un index. Une valeur entière, sélectionnée parmi un ensemble fini de valeurs entières, est associée à chaque descripteur. Comparer des images entre elles revient alors à comparer des ensembles de valeurs entières entre eux, ce qui demande peu de ressource de calcul, et accélère d'autant la recherche. Cependant, les dispositifs basés sur cette dernière technique, dite du "bag of features", ne donnent pas entière satisfaction. Le nombre d'images jugées similaires est souvent trop grand, des images très différentes étant considérées par le dispositif comme similaires, et/ou il n'est pas possible de distinguer les images les plus pertinentes.

Si l'on augmente le nombre de valeurs de l'index, l'effet contraire est obtenu, c'est-à-dire que les dispositifs ne retournent pratiquement plus aucune image.

Pour pallier cette difficulté le document [12] : "Object retrieval with large vocabularies and fast spatial Matching", J.Philbin, O.Schum, M. Isard, J. Sivic et A. Zisserman, CPVR'2007, propose de compléter la technique du "bag of features" en ré-évaluant les résultats obtenus grâce à cette dernière technique en intégrant des informations spatiales sur la position des points.

L'article "Content based copy retrieval using distortion-based probabilistic similarity search" de Alexis Joly et. al. décrit une technique pour retrouver des copies d'un contenu vidéo dans une base de données en utilisant caractéristiques locales.

Par exemple, [1] réalise une transformation dite de "Hough" pour déterminer à chaque fois les paramètres d'une transformation affine transformant l'image requête en l'une des images-résultats. Une note est attribuée à chacune des images, en fonction du nombre de descripteurs qui vérifient la transformation affine respective. Le calcul d'une transformation de Hough nécessite des ressources telles, que cette transformation ne peut être mise en oeuvre pour des lots d'images importants.

Cependant, en raison de son très fort coût de calcul, la phase de reclassement ne s'applique qu'à un nombre limité d'images. Pour de très grosses bases d'images, des images similaires sont ainsi manquées car la technique du bag-of-features ne les a pas classées suffisamment bien.

Le Demandeur propose un dispositif qui vient améliorer la situation.

Ce dispositif peut comprendre :
- une mémoire, capable de stocker une pluralité de jeux de descripteurs (*dij*), chaque jeu correspondant à une image,
- chaque descripteur (*dij*) étant associé à une zone désignée de l'image, et comprenant de premières données de type vecteur (*xij*), de secondes données de type angle (*aij*), et de troisièmes données de type scalaire (*sij*),
- un premier opérateur, capable de recevoir une désignations de deux descripteurs (*dij*) et d'établir un booléen reflétant la vérification d'un critère de similarité des vecteurs de descripteurs (*xij*), à partir d'une comparaison entre les premières données de ces descripteurs,
- un second opérateur, capable de recevoir une désignation de deux descripteurs (*dij*) et d'établir un paramètre d'angle de rotation (*DeltaA*) à partir des secondes données (*aij*) respectives des deux descripteurs (dij),
- un troisième opérateur, capable de recevoir une désignation de deux descripteurs (*dij*) et d'établir un paramètre de facteur d'échelle (DeltaS) à partir des troisièmes données de ces descripteurs (*sij*),
- un contrôleur, capable de recevoir les désignations d'un premier et d'un second jeu de descripteurs (*dij*), et agencé pour appliquer le premier opérateur à chaque couple formé d'un descripteur (*dij*) du premier jeu, et d'un descripteur du second jeu (*dij*), pour en déduire une liste de couples de descripteurs similaires,
- d'appeler le second opérateur et le troisième opérateur pour chacun des couples de descripteurs de ladite liste et stocker en mémoire l'ensemble des paramètres obtenus, et
- un estimateur de la ressemblance entre les images correspondant respectivement au premier et au second jeu de descripteurs (*dij*), à partir d'un traitement statistique sur ledit ensemble de paramètres.

Grâce à cette configuration, le dispositif selon l'invention autorise une comparaison plus fine et donc plus pertinente d'images entre elles, ou d'une image à une pluralité d'images, tout en conservant des temps de traitement voisins, voire inférieurs aux dispositifs de l'état de la technique.

D'autres caractéristiques et avantages de l'invention apparaîtront à l'examen de la description détaillée ci-après et des dessins annexés sur lesquels :
- la figure 1 représente schématiquement un dispositif d'aide à la reconnaissance d'images selon l'invention,
- la figure 2 est un ordinogramme illustrant une réalisation d'un dispositif de signature pour le dispositif de la figure 1,
- la figure 3 est un ordinogramme illustrant une partie du dispositif de signature de la figure 2,
- la figure 4 est un ordinogramme illustrant une première réalisation d'un premier opérateur pour le dispositif de la figure 1,
- la figure 5 est analogue à la figure 4, pour une variante de réalisation,
- la figure 6 est un ordinogramme illustrant un mode de réalisation d'un second opérateur pour le dispositif de la figure 1,
- la figure 7 est un ordinogramme illustrant un mode de réalisation d'un troisième opérateur pour le dispositif de la figure 1,
- la figure 8 est un ordinogramme illustrant un mode de réalisation d'un interrogateur pour le dispositif de la figure 1,
- la figure 9 est analogue à la figure 8 pour un second mode de réalisation,
- la figure 10 est un schéma illustrant une structure de listes inversées pour une seconde structure de stockage pour le dispositif de la figure 1,
- la figure 11 est un graphique représentant une efficacité du premier opérateur en fonction de la valeur d'un paramètre de seuil, et
- la figure 12 est un graphique représentant la performance du premier opérateur en fonction d'un paramètre de dimension.

Les dessins annexés pourront non seulement servir à compléter l'invention, mais aussi contribuer à sa définition, le cas échéant.

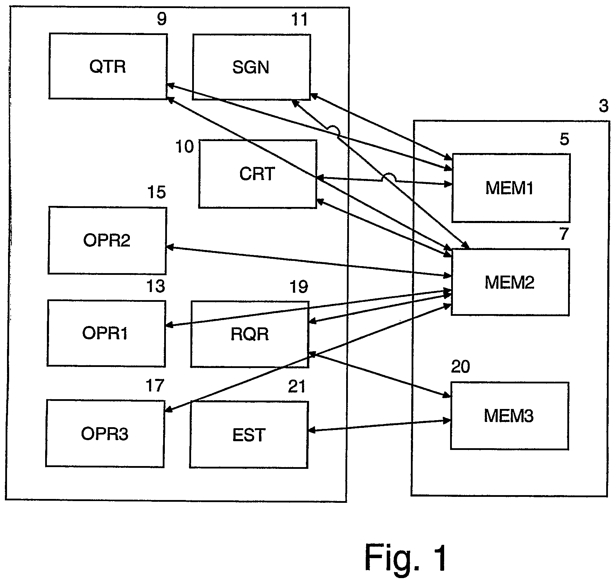

La figure 1 illustre un dispositif d'aide à la reconnaissance d'images selon l'invention.

Le dispositif 1 comprend de la mémoire 3 et un dispositif de traitement 5, capable d'interaction avec cette mémoire 3.

La mémoire 3 comprend une première structure de stockage 5 pour mémoriser, au moins temporairement, un ou plusieurs jeux de descripteurs d'images. La première structure de stockage 5 mémorise en outre une correspondance entre chacun des jeux de descripteurs et un identifiant de l'image décrite.

Dans la première structure de stockage, chacun des descripteurs *dij* correspondant à une image *j* regroupe :
- de premières données de type vecteur, représentant un vecteur caractéristique *xij* d'une zone d'intérêt *i* de l'image *j*,
- de secondes données de type scalaire, représentant un angle *aij* caractéristique de ladite zone d'intérêt *i* de l'image *j*,
- de troisièmes données de type scalaire, représentant une échelle *sij* caractéristique de ladite zone d'intérêt *i* de l'image *j*,
- de quatrièmes données, représentant une position *cij* d'un centre de cette zone d'intérêt *i* de l'image *j*. Ces quatrièmes données peuvent aussi être considérées comme un supplément aux premières données de type vecteur, autrement dit comme de premières données supplémentaires.

Chacun des vecteurs *xij* présente une dimension *d* choisie, par exemple 128.

Différents outils permettent de générer un jeu de descripteurs *dij* à partir de données d'image *j*. Fonctionnellement, ces outils mettent en oeuvre une phase de détection de zones d'intérêt *i* dans une image *j*, puis une phase d'attribution d'un descripteur local *dij* à cette zone. Par exemple, [1] divulgue une méthode de détection des zones d'intérêts et d'attribution de descripteurs locaux.

Le dispositif 1 peut être agencé pour recevoir les jeux de descripteurs *dij* d'un outil de génération. En variante, le dispositif 1 peut intégrer un outil de ce type. Le dispositif 1 est alors agencé pour recevoir des données d'images. En option, le dispositif 1 peut comprendre une structure de stockage supplémentaire pour mémoriser durablement ces données d'images, par exemple sous la forme d'une base de données.

La mémoire 3 comprend en outre une seconde structure de stockage 7, mémorisant une représentation d'un ou plusieurs jeux de descripteurs d'images sous une forme particulière, différente de la première structure de stockage 5.

Pour chacun des descripteurs *dij*, la seconde structure de stockage 7 mémorise une relation entre ce descripteur *dij* et une valeur entière *q(xij)* sélectionnée parmi un ensemble de valeurs entières commun à l'ensemble des descripteurs *dij,* appelé index. Cette valeur entière *q(xij)* est parfois désignée "*mot visuel*". Cette valeur entière *q(xij)* est établie en fonction des données de vecteur caractéristique *xij.*

Le nombre d'index possible dépend de l'application envisagée pour le dispositif 1. Le nombre d'index peut généralement être compris entre 1 000 et 1 000 000. Avantageusement, la seconde structure de stockage 7 mémorise pour chacun des descripteurs *dij* une correspondance entre un identifiant de ce descripteur *dij* et sa valeur entière *q(xij).* Ceci permet de réduire la taille de la seconde structure de stockage 7.

En variante, la seconde structure de stockage 7 mémorise à chaque fois une correspondance entre un identifiant de l'image *j* correspondant au descripteur *dij* et la valeur entière *q(xij)* en question. De préférence, l'identifiant d'image *j* est mémorisé en remplacement de l'identifiant du descripteur *dij* pour réduire encore plus la taille de la seconde structure de stockage 7.

De manière particulièrement avantageuse, la seconde structure de stockage 7 prend la forme d'une structure de listes inversées.

La seconde structure de stockage 7 se présente alors sous la forme d'un ensemble de listes. À chacune des valeurs entières de l'index est associée une liste, laquelle liste comporte un identifiant de chacun des descripteurs *dij* auquel cette valeur entière est associée. Cette structure de stockage permet de mémoriser une représentation de l'ensemble des jeux de descripteurs *dij,* à l'aide de valeurs entières, de manière très compacte. Cette forme de réalisation de la seconde structure de stockage 5 accélère également les opérations d'interrogation.

En variante, chacune des listes de la seconde structure de stockage 7 peut comporter, en remplacement ou en supplément de l'identifiant d'un descripteur *dij* lui-même, un identifiant *idj* de l'image à laquelle correspond ce descripteur *dij* dans la première structure de stockage 5. Le remplacement d'un identifiant de descripteur *dij* par un identifiant d'image *idj* réduit encore la taille de la seconde structure de stockage 7.

Dans le cas où une même valeur entière *q* est associée à plusieurs descripteurs *dij* d'une même image *j*, la liste correspondant à cette valeur entière *q* peut comporter soit un nombre d'occurrence en relation avec l'identifiant de l'image *idj*, soit plusieurs entrées, chaque entrée dans la liste correspondant à une occurrence.

Cette seconde variante peut être privilégiée, car elle n'augmente que très faiblement la taille de la seconde structure de stockage 7, étant donné qu'il est peu probable qu'une même valeur entière *q* soit attribuée à des descripteurs différents *dij* d'une même image *j*.

Le dispositif de traitement 5 comprend un quantificateur 9 capable d'associer une valeur entière *q(xij)* à chacun des descripteurs *dij* mémorisés dans la première structure de stockage 5 en fonction des données de vecteur caractéristique *xij* correspondantes.

Le quantificateur 9 est agencé pour mettre en oeuvre une moyenne sur les k-plus proches voisins, ou "k-means clustering" en anglais, sur un ensemble de données d'images témoins. Il en résulte un ensemble de centroïdes et de cellules de Voronoi. L'identifiant du centroïde le plus proche du vecteur caractéristique *xij* du descripteur *dij* traité est attribué en tant que valeur entière *q(xij).* La proximité d'un vecteur caractéristique *xij* à un centroïde peut être calculée à l'aide d'une distance euclidienne.

Le quantificateur 9 est optionnel. Le dispositif 1 peut être agencé pour recevoir l'ensemble des valeurs entières *q(xij)* qui sont associées aux descripteurs *dij* de la première structure de stockage 5, éventuellement en remplacement des jeux de descripteurs *dij* eux-même,

Le dispositif de traitement 5 comprend en outre un dispositif de signature 11, agencé pour recevoir un descripteur *dij,* et pour établir des données de type vecteur représentant une signature binaire multidimensionnelle *bi(xij)* de ce descripteur *dij*, à partir des données de vecteur caractéristique *xij.* Le vecteur de signature binaire *bi(xij)* présente une dimension *db* choisie, par exemple 64.

Chacune des composantes du vecteur de signature binaire *bi(xij)* peut prendre exclusivement la valeur "0" ou la valeur "1". Autrement dit, le vecteur de signature binaire *bi(xij)* est composé de booléens.

La seconde structure de mémoire 7 est agencée pour mémoriser une correspondance entre les données de signature binaire *bi(xij)* de chacun des descripteurs *dij* mémorisés dans la première structure de stockage 5 et un identifiant de ce descripteur *dij,* ou de l'image *j* correspondant à ce descripteur *dij.*

Lorsque la seconde structure de stockage 7 est réalisée sous la forme de listes inversées, chacune des signatures binaires *bi(xij)* peut être stockée au niveau de l'entrée relative au descripteur *dij* correspondant dans la liste. Autrement dit, dans cette réalisation de la seconde structure de stockage 7, chacune des signatures binaires *bi(xij)* est mémorisée en correspondance avec la valeur entière *q(xi)* attribuée au descripteur *dij,* et non avec les données constituant ce descripteur *dij* (vecteur, angle, échelle caractéristiques). Par exemple, chacune des entrées de la structure en listes inversées peut présenter un nombre fixé de bits, par exemple 64, pour le stockage d'une signature binaire. Cette réalisation permet un stockage particulièrement compact des signatures binaires, en correspondance d'identifiant *idj* d'image, ou de descripteur *dij.*

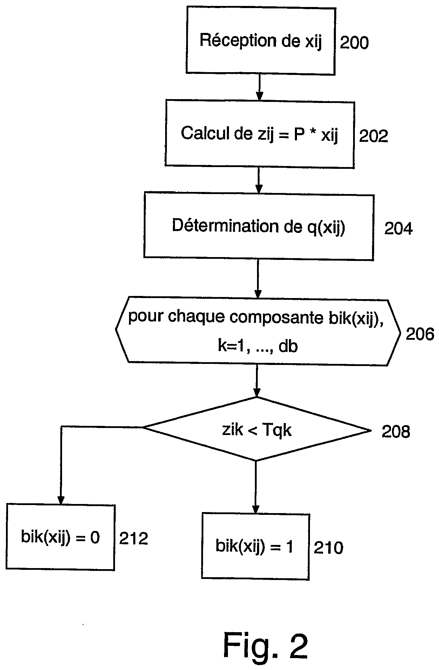

La figure 2 illustre un agencement du dispositif de signature 11.

Dans une étape 200, le dispositif de signature 11 reçoit des données de vecteur caractéristique *xij* relatives à un descripteur *dij* mémorisé dans la première structure de stockage 5.

Dans une étape 202, des données de type vecteur, représentatives d'une projection du vecteur caractéristique *xij*, sont calculées à l'aide d'une matrice de projection *P* de dimensions *db* x *d.*

La même matrice de projection *P* est utilisée pour l'ensemble des descripteurs *dij* mémorisés dans la première structure de stockage 5 et dont on souhaite obtenir une représentation dans la seconde structure de stockage 7.

Des données représentatives d'un vecteur projeté *zij*, de dimension *db*, sont obtenues. Les composantes du vecteur projeté *zi* sont notées *zi1*, *zi2*, ..., *zidb.*

Dans une étape 204, une valeur entière *q(xij)* est associée au vecteur caractéristique *xij.* Le quantificateur 9 peut être appelé pour établir la valeur entière *q(xi).* La valeur entière *q(xi)* peut également être lues dans la seconde structure de stockage 7, dans le cas où une représentation du descripteur *dij* correspondant existe déjà dans cette seconde structure de stockage 7.

Lorsque cette seconde structure de stockage 7 est réalisée sous la forme de listes inversées, la correspondance entre la valeur entière *q(xij)* et le vecteur caractéristique *xij* peut être déjà stockée, sous la forme d'un identifiant de liste, par exemple un numéro d'index, et d'une entrée dans cette liste comportant un identifiant du descripteur *dij.* Si ladite correspondance est absente de la seconde structure de stockage 7, alors elle peut être mémorisée consécutivement à l'étape 204.

Dans une étape 206, une boucle de calcul sur les composantes *bik* du vecteur de signature *bi(xij)* est commencée. L'indice k varie de 1 à *db.*

Dans une étape 208, la *k*-ième composante *zik* du vecteur projeté *zi* est comparée à une valeur médiane *Tq(xij)k*, propre à la valeur entière *q(xij)* du vecteur caractéristique *xij* et à la composante *k*.

Si la *k*-ième composante *zik* du vecteur projeté zi est supérieure à la valeur médiane *Tq(xij)k*, alors la *k*-ième composante *bik(xij)* du vecteur de signature binaire *bi(xij)* prend la valeur "1" (un), à l'étape 210. Sinon, cette *k*-ième composante *bik(xij)* prend la valeur "0" (zéro), au cours de l'étape 212.

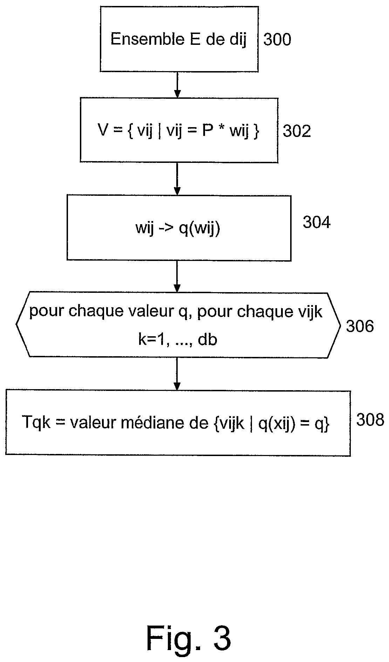

La figure 3 illustre la détermination des valeur médianes *Tq(xij)k* par le dispositif de signature 11.

Dans une étape 300, le dispositif de signature 11 reçoit un ensemble *E* de descripteurs *eij* relatifs à des données d'images distinctes des données d'images représentées dans la seconde structure de mémoire 7. Chacun des descripteurs *eij* comprend des données représentatives d'un vecteur caractéristique *wij*, de dimension *db.*

Dans une étape 302, chacun des vecteurs caractéristiques *wij* des descripteurs *eij* de l'ensemble *E* est projeté à l'aide de la matrice de projection *P*. Un ensemble V de vecteurs projetés *vij* est obtenu. Les composantes d'un vecteur projeté *vij* sont notées *vij1*, *vij2*, ..., *vijdb.*

Dans une étape 304, une valeur entière de l'index est attribuée à chacun des vecteurs caractéristiques *wij*, par exemple à l'aide du quantificateur 9. La mémoire 3 stocke, au moins temporairement, une correspondance entre chaque valeur entière *q* de l'index et l'ensemble des composantes de chacun des vecteurs projetés *vij* dont le vecteur caractéristique *wij* s'est vu attribué cette valeur entière *q*. Une structure de listes inversées peut être utilisée.

Dans une étape 306, une boucle sur les valeurs entières *q* de l'index et sur les composantes *vijk* des vecteurs projetés *vij* est commencée. L'indice *k* varie de 1 à *db.*

Dans une étape 308, la valeur médiane *Tqk*, relative à la valeur entière *q* et à la composante *k,* est calculée en tant que valeur médiane des k-ièmes composantes *vijk* des vecteurs projetés *vij* associés à la valeur entière *q* en question.

La matrice de projection *P* est obtenue à partir d'une matrice de valeurs gaussiennes *A* générée aléatoirement. La matrice *A* présente *db* colonnes.

Une factorisation, ou décomposition, de type *QR* est effectuée sur la matrice de valeurs gaussiennes *A*, où *Q* est une matrice orthogonale et *R* une matrice triangulaire. Les *d* premières lignes de la matrice *Q*, laquelle présente *db* colonnes, forment la matrice de projection *P*.

Le dispositif de traitement comprend encore un dispositif de caractérisation 10 capable d'interaction avec la première structure de stockage 5 et la seconde structure de stockage 7. Le dispositif de caractérisation est agencé pour établir, pour chacun des descripteurs *dij* mémorisés dans la première structure de stockage 5, des données d'angle caractéristique quantifié *qaij*, à partir des données d'angle caractéristique *aij*, et des données de facteur d'échelle quantifiées *qsij*, logarithmiques, à partir des données d'échelle caractéristique *sij.* La quantification de données d'un angle caractéristique comprend l'attribution d'une valeur indexée associée à un intervalle de valeurs angulaires dans lequel se situe l'angle caractéristique. De même, la quantification de données d'une échelle caractéristique comprend l'attribution d'une valeur indexée associée à un intervalle de valeurs de facteur d'échelle dans lequel se situe le logarithme décimal de l'échelle caractéristique.

Les valeurs d'angle quantifié *qaij* et de facteur d'échelle quantifié *qsij* de chacun des descripteurs *dij* mémorisés dans la première structure de stockage 5 sont mémorisées dans la seconde structure de stockage 7, en correspondance d'un identifiant du descripteur *dij* en question, ou de l'image *j* pour laquelle ce descripteur *dij* a été généré.

Lorsque cette seconde structure de stockage 7 est réalisée sous la forme de listes inversées, ces valeurs d'angle quantifié *qaij* et de facteur d'échelle quantifié *qsij* sont avantageusement stockés au niveau de l'entrée représentant un descripteur *dij* en question. Autrement dit, dans la liste particulière désignée par la valeur entière *q(xij),* l'identifiant du descripteur *dij* ou de l'image *j* se voit adjoindre lesdites valeurs quantifiées. Chaque entrée d'une liste peut comprendre un certain nombre de bits réservés au stockage de ces valeurs quantifiées, par exemple 6 bits pour le stockage de la valeur d'angle quantifié *qaij* et 5 bits pour celui de la valeur de facteur d'échelle quantifié *qsij.* On comprend que le nombre de bits réservés détermine l'étendue des intervalles de quantification.

Le dispositif de traitement 5 comprend encore un premier opérateur 13 capable d'interaction avec la seconde structure de mémoire 7. Le premier opérateur 13 est agencé pour établir une valeur de similarité *f(xij,zkl)* entre les vecteurs caractéristiques *xij* et *ykl* de deux descripteurs dont une représentation est mémorisée dans la seconde structure de mémoire 7.

La détermination de cette valeur de similarité *f(xij,ykl)* consiste essentiellement à vérifier ici si les valeurs entières *q(xij)* et *q(ykl)* des vecteurs caractéristiques *xij et ykl* remplissent une condition de similarité préétablie.

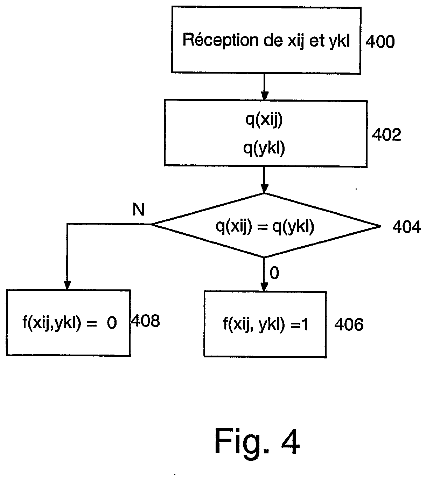

La figure 4 illustre un premier mode de réalisation du premier opérateur 13.

Dans une étape 400, le premier opérateur 13 reçoit un premier vecteur caractéristique *xij* et un second vecteur caractéristique *ykl*, ou seulement des identifiants de ces vecteurs caractéristiques.

Dans une étape 402, le premier opérateur 13 établit la valeur entière *q(xij)* de l'index pour du premier vecteur caractéristique et la valeur entière *q(ykl)* pour le second vecteur caractéristique. Avantageusement, l'une au moins des ces valeurs entières *q(xij)* et *q(ykl)* est obtenue de la seconde structure de stockage 7. La récupération de ces valeurs entières *q(xij)* et *q(ykl)* est alors particulièrement rapide.

Dans une étape 404, le premier opérateur 13 compare les valeurs entières *q(xij)* et *q(ykl)* obtenues à l'étape 402.

Si ces valeurs entières *q(xij)* et *q(ykl)* sont égales, alors le premier opérateur retourne un booléen de valeur "1" en tant que valeur de similarité *f(xij,ykl),* à l'étape 406. Ceci indique la similarité des vecteurs caractéristiques au sens de ce premier critère.

Sinon, la valeur de similarité *f(xij,ykl)* retournée prend la valeur "0" , à l'étape 408.

Lorsque la seconde structure de stockage 7 est réalisée sous la forme de listes inversées, et que l'une des valeurs entières *q(xij)* et *q(ykl)* est connue du premier opérateur 13, la comparaison avec l'autre de ces valeurs entières revient à parcourir la liste identifiée par la valeur entière connue, pour vérifier si cette liste contient l'identifiant du descripteur correspondant au vecteur caractéristique de l'autre valeur entière. Une valeur entière *q(xij)* attribuée au vecteur caractéristique *xij* du descripteur *dij* est en particulier connue lorsqu' elle a été reçue à l'étape 400, ou encore lorsqu'elle a été préalablement récupérée dans la seconde structure de stockage 7.

La mémorisation d'une représentation des vecteurs caractéristiques des descripteurs sous forme de valeurs entières dans la seconde structure de stockage 7 permet une comparaison particulièrement rapide de vecteurs caractéristiques entre eux. Cette comparaison est encore plus rapide lorsqu'une structure de listes inversées est mise en oeuvre pour la seconde structure de stockage 7.

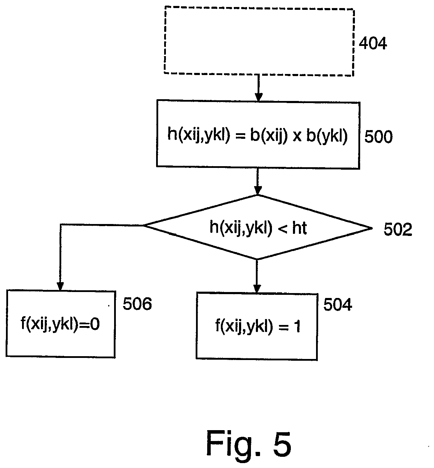

Dans une variante de réalisation illustrée par la figure 5, l'étape 404 se poursuit par les étapes suivantes, en remplacement de l'étape 406.

Dans une étape 500, le premier opérateur 13 calcule un produit scalaire *h(bij(xij),bkl(ykl))* des signatures binaires *bij(xij)* et *bkl(ykl)* issues du premier vecteur caractéristique *xij* et du second vecteur caractéristique *ykl* respectivement. Les valeurs de ces signatures binaires *bij(xij)* et *bkl(xkl)* sont récupérées dans la seconde structure de stockage 7, à partir des valeurs entières *q(xij)* et *q(ykl)* correspondant au premier vecteur caractéristique *xij* et au second vecteur caractéristique *ykl* respectivement.

Dans une étape 502, le produit scalaire *h(bij(xij),bkl(ykl))* obtenu est comparé à une valeur de seuil *ht* prédéterminée.

Si ce produit scalaire *h(bij(xij),bkl(ykl))* est inférieur à la valeur de seuil *ht,* alors le premier opérateur retourne un booléen de valeur "1" (un) en tant que valeur de similarité *f(xij,ykl),* à l'étape 504. Sinon, le premier opérateur 13 retourne un booléen de valeur "0" en tant que valeur de similarité *f(xij,ykl),* à l'étape 506.

Dans un développement avantageux, le premier opérateur renvoie à l'étape 506 une valeur pondérée en tant que valeur de similarité *f(xij,ykl)* en remplacement d'un booléen de valeur "1".

Comme décrit dans [5] par exemple, on peut utiliser une pondération de type "tf-idf" (pour "term frequency - inverse document frequency", à savoir : "fréquence des termes - fréquence inverse des documents"). Cette pondération est fréquemment utilisée dans le domaine de la recherche de documents textuels.

Le dispositif de traitement 5 comprend en outre un second opérateur 15 capable d'interaction avec la seconde structure de mémoire 7 pour établir un paramètre d'angle de rotation *DeltaA* pour deux descripteurs *dij* et *dkl* de la première structure de mémoire 5. Le second opérateur est agencé pour établir ce paramètre d'angle de rotation *DeltaA* à partir des données de valeurs d'angle caractéristique quantifié *qaij* et *qakl* mémorisées dans la seconde structure de stockage 7. Lorsqu'une structure de listes inversées est utilisée pour cette seconde structure de stockage 7, ces valeurs d'angle caractéristique quantifié *qaij* et *qakl* peuvent être lues à partir des valeurs entières *q(xij)* et *q(ykl)* attribuées descripteurs *dij* et *dkl.*

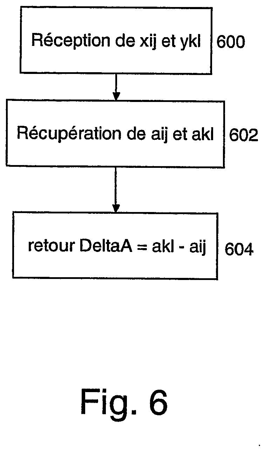

La figure 6 illustre un mode de réalisation de ce second opérateur 15.

Dans une étape 600, le second opérateur 15 reçoit un premier vecteur caractéristique *xij* et un second vecteur caractéristique *ykl*, ou, de préférence, uniquement des identifiants de ces vecteurs caractéristiques.

Dans une étape 602, le second opérateur 15 récupère les données d'angle caractéristique quantifié *qaij* et *qakl* pour chacun des descripteurs *dij* et *dkl.* Lorsque les premier vecteur caractéristique *xij* et second vecteur caractéristique *ykl* sont reçus à l'étape précédente, il peut être nécessaire d'établir préalablement leurs valeurs entières *q(xij)* et *q(ykl)* pour interroger la seconde structure de stockage 7, en particulier lorsque celle-ci est réalisée sous la forme de listes inversées.

Lorsqu'une telle structure de listes inversées est utilisée, la connaissance de l'une de ces valeurs entières, par exemple *q(xij),* permet une recherche très rapide consistant à parcourir la liste identifiée par cette valeur entière *q(xij)* pour y trouver l'identifiant du descripteur *dkl* auquel est adjoint la valeur d'angle quantifiée *qakl.*

Dans une étape 604, le second opérateur 15 retourne une différence entre les valeurs d'angles caractéristique quantifié *qaij* et *qakl* en tant que paramètre de rotation *DeltaA.* De préférence, le paramètre de rotation *DeltaA* est retourné sous forme quantifiée.

Le dispositif de traitement 5 comprend encore outre un troisième opérateur 17 capable d'interaction avec la seconde structure de mémoire 7 pour établir un paramètre de facteur d'échelle *DeltaS* pour deux descripteurs *dij* et *dkl* mémorisés dans la première structure de stockage 5 à partir des données de facteurs d'échelles quantifiés mémorisées dans la seconde structure de mémoire 7.

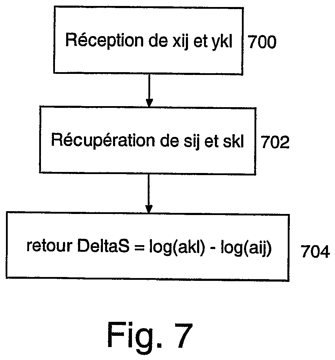

La figure 7 illustre un mode de réalisation de ce troisième opérateur 17, analogue au mode de réalisation du second opérateur 15.

Dans une étape 700, le troisième opérateur 17 reçoit un premier vecteur caractéristique *yij* et un second vecteur caractéristique *ykl*, ou, de préférence, uniquement des identifiants des descripteurs *dij* et *dkl* auquels ces vecteurs caractéristiques correspondent. L'une des valeurs entières *q(xij)* et *q(ykl)* attribuées à ces vecteurs caractéristiques peut également être reçue. Dans une étape 702, le troisième opérateur récupère les données de facteur d'échelle caractéristique quantifié *qsij* et *qskl* de chacun des deux descripteurs *dij* et *dkl.*

Dans une étape 704, le troisième opérateur retourne la différence logarithmique des facteurs d'échelle caractéristiques en tant que paramètre d'échelle *DeltaS.* De préférence, le paramètre d'échelle *DeltaS* est retourné sous une forme quantifiée.

Le dispositif de traitement comprend encore un interrogateur 19, capable de recevoir un premier jeu de descripteurs *di1,* relatif à une première image, ou, de préférence, uniquement un identifiant *id1* de cette première image, et un second j eu de descripteurs *di2,* relatif à une seconde image ou, de préférence, uniquement un identifiant *id2* de cette seconde image.

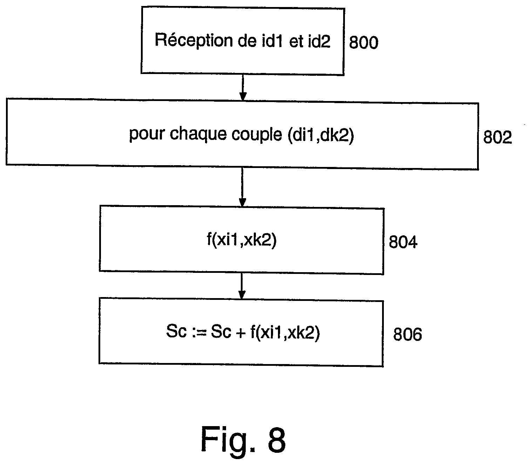

La figure 8 illustre un mode de réalisation de l'interrogateur 19. À l'étape 800, l'interrogateur 19 reçoit l'identifiant *id1* d'une première image et l'identifiant *id2* d'une seconde image.

Pour chaque couple formé d'un descripteur *di1* de la première image et d'un descripteur *dj2* de la seconde image, l'interrogateur 19 appelle itérativement le premier opérateur 13, au cours d'une étape 802. Ceci est réalisé pour l'ensemble des premier et second jeux de descripteurs. L'opérateur 13 est appelé à chaque fois à l'aide des identifiants des descripteurs *di1* et *dj2.*

Le premier opérateur 13 renvoie une valeur de similarité *f(xi1,yk2)*, à l'étape 804. Comme la seconde structure de stockage 7 optimise les opérations de recherche de calcul entre descripteurs, grâce à la représentation indexée, les étapes 802 et 804 sont réalisées particulièrement rapidement.

L'interrogateur 19 est agencé pour interagir avec une troisième structure de stockage 20 afin d'y mémoriser une correspondance entre une variable de score *Sc*, et un identifiant de l'une au moins des première et seconde image. La variable de score *Sc* somme les valeurs de similarité *f(xi1,yk2)* retournées en tant que résultats des appels successifs du premier opérateur 13, au cours d'une étape 806.

À l'issue de l'étape 806, la valeur de la variable de score *Sc* résultante donne une mesure de ressemblance, ou de similarité, entre la première image et la seconde image. La valeur de la variable de score *Sc* peut également être vue comme une mesure de pertinence, ou de proximité, de la seconde image par rapport à la première image. Cette première image peut être vue comme une image-requête.

La valeur finale de la variable de score *Sc* peut être traitée par une fonction statistique, par exemple pour pondérer cette valeur.

Lorsque la seconde structure de stockage 7 est réalisée sous la forme de listes inversées, cette comparaison des première et seconde images entre elles est encore accélérée. Lorsque les valeurs entières *q(xi1)* attribuées aux descripteurs de la première image, par exemple, sont connues, les étapes 802, 804 et 806 consistent à parcourir chacune des listes identifiées par ces valeurs entières *q(xi1)* à la recherche à chaque fois d'un identifiant d'un descripteur de la seconde image. Lorsqu'un tel identifiant est repéré, la variable de score *Sc* est augmentée de la valeur *f(xi1,yk2).* Par exemple, la variable de score *Sc* est à chaque fois augmentée de la valeur 1 ("un"). Dans le cas où un identifiant d'image *idj* est mémorisé en remplacement d'un identifiant de descripteur *dij*, c'est l'identifiant de la seconde image qui est recherché, ce qui accélère encore la comparaison.

L'interrogateur 19 peut être appelé répétitivement pour la première image, ou le premier jeu de descripteur *di1*, avec à chaque fois une seconde image, ou un second jeu de descripteurs *dij*, représentée dans de la seconde structure de stockage 7, de manière à comparer la première image à l'ensemble des images représentées dans la seconde structure de stockage 7.

Une variable de score *Scj* peut ainsi être obtenue pour chacune des images *j* de la base, représentant une mesure de proximité de l'image *j* par rapport à la première image, ou image-requête. Autrement dit, la troisième structure de stockage 20 peut contenir un tableau de scores *Sc1[]*, relatif à la première image, regroupant l'ensemble des variables de scores *Scj* en correspondance à chaque fois d'un identifiant *idj* de l'image *j*.

Un classement des images *j* quant à leur ressemblance, ou similarité, à la première image est ainsi obtenu.

Lorsque la seconde structure de stockage 7 est réalisée sous la forme de listes inversées, la comparaison de la première image à l'ensemble des images représentés dans cette seconde structure 7 est particulièrement rapide. L'interrogateur 19 est agencé pour, à partir de chacune des valeurs entières attribuées aux descripteurs de la première image, parcourir la liste identifiée par cette valeur entière dans la seconde structure de mémoire 7 et pour augmenter le score *Scj* de chacune des images à laquelle correspond une entrée de cette liste. On comprend qu'il est alors particulièrement intéressant de mémoriser dans cette entrée l'identifiant d'image *idj* en remplacement d'un identifiant de descripteur pour augmenter encore la rapidité de la comparaison.

Lorsque des signatures binaires *bi* sont mémorisées dans la seconde structure de stockage 7, le score *Scj* d'une image *j* est encore plus pertinent, car la comparaison des signatures binaires affine la comparaison de deux images entre elles. Le Demandeur a constaté que les images retournées par l'interrogateur 19, dans ce mode de réalisation, sont plus pertinentes que les images identifiées par les dispositifs de l'état de la technique.

Dans ces dispositifs un choix de cardinal d'index *k* doit être fait. Une valeur de cardinal d'index *k* faible a pour conséquence des cellules de Voronoi larges. Ceci présente l'avantage que des versions bruitées des descripteurs ont un grande probabilité de se trouver dans la même cellule (même valeur entière) et l'inconvénient que les descripteurs perdent de leur pouvoir discriminant, puisque des descripteurs très différents peuvent se trouver dans la même cellule. Une valeur de cardinal d'index *k* faible a pour conséquence des cellules de Voronoi réduites. Ceci a l'avantage de conserver une bonne précision des descripteurs, mais présente l'inconvénient d'une forte probabilité qu'une version bruitée d'un descripteur se trouve dans une cellule distincte de celle du descripteur en question, ainsi que d'une plus grande consommation de mémoire.

Grâce aux signatures binaires, le dispositif selon l'invention présente les avantages d'une valeur de cardinal d'index *k* élevée et de faibles valeurs de cardinal d'index *k.*

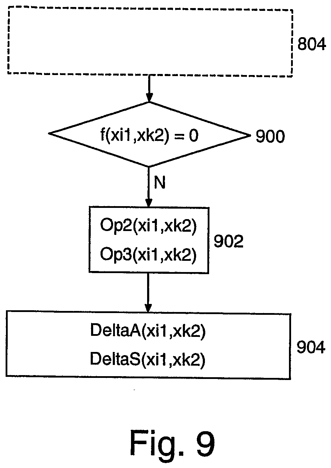

Dans un second mode de réalisation, illustré par la figure 9, l'interrogateur 19 est agencé pour réaliser les opérations suivantes, lorsque la valeur de similarité retournée à l'étape 804 est non nulle (étape 900).

L'interrogateur 19 appelle le second opérateur 13 et le troisième opérateur 15 pour les descripteurs *di1* et *dk2* en cours de comparaison, à l'étape 902. Le second opérateur 13 et le troisième opérateur 15 renvoient respectivement une valeur quantifiée de paramètre d'angle de rotation *DeltaA* et une valeur quantifiée de paramètre de facteur d'échelle *DeltaS,* à l'étape 904.

L'interrogateurl9 est agencé pour interagir avec la troisième structure de stockage 20 de manière à mémoriser une correspondance entre la valeur quantifiée d'angle de rotation *DeltaA,* la valeur quantifiée du facteur d'échelle *DeltaS* et la valeur de similarité *f(di1,dk2)* d'une part et un identifiant de l'une au moins des première et seconde images.

Ici, l'interrogateur 19 est agencé pour créer un tableau de score *Se2as[]* rassemblant pour chaque couple de valeur quantifiée d'angle de rotation *DeltaA* et de valeur quantifiée de facteur d'échelle *DeltaS* un score Sc successivement augmenté de la valeur de similarité *f(dil,dk2)* retournée dans ces conditions d'angle et d'échelle. Dans ce tableau, les données d'angle et d'échelle sont quantifiées. Autrement dit, l'interrogateur 19 construit le tableau de score *Sc2as[]* pour la seconde image un tableau de dimensions choisies, indiquant des classes d'angle, par exemple en colonnes, et des classes de facteur d'échelle, par exemple en ordonnée : la valeur de similarité est inscrite en correspondance des classes d'angles et de facteur d'échelle, le cas échéant additionnée à une valeur de similarité antérieure.

Le tableau de score *Scas[]* ainsi construit peut être traité au moyen d'un estimateur 21 capable d'interaction avec la troisième structure de stockage 20 pour effectuer des traitements statistiques. Par exemple, l'estimateur 21 peut être agencé pour établir en tant que valeur finale de score *Sc2* pour l'image 2, la valeur maximale des scores de l'ensemble du tableau de score *Scas[].* En pratique, l'estimateur 20 peut être agencé de manière à lisser les résultats obtenus en rassemblant les résultats de cellules adjacentes en une même cellule, pour éviter des effets de bords, ou bruit de quantification.

En variante, l'estimateur peut être agencé pour pondérer les résultats pour certaines valeurs d'angles et/ou d'échelle.

Cette pondération est choisie selon l'application pour privilégier certains angles de rotation et certains rapports d'échelles, en particulier les angles de valeur 0, pouvant correspondre à des prises de vue en mode paysage, et 90°, pouvant correspondre à une prise de vue en mode portrait, et la valeur de facteur d'échelle 0, pouvant correspondre à l'absence d'effet de zoom.

Lorsque la seconde structure de stockage 7 est réalisée sous la forme de listes inversées, la comparaison entre deux images est encore plus rapide, en particulier grâce au stockage des valeurs quantifiées d'angle et d'échelle directement dans ces listes. L'ensemble des valeurs entière *q(x1i)* attribuées aux descripteurs de la première image étant connus, la comparaison consiste à parcourir chacune des listes identifiées par l'une de ces valeurs entière à la recherche de l'identifiant *id2* de la seconde image, ou d'un identifiant de descripteur correspondant à cette seconde image. Lorsqu'une telle entrée est trouvée, la valeur de similarité est mémorisée en correspondance avec les valeurs quantifiées d'angle et de facteur d'échelle.

L'interrogateur 19 peut réaliser le même traitement avec l'ensemble des images *j*, ou des jeux de descripteurs *dij*, dont une représentation est mémorisée la seconde structure de stockage 7. Il en résulte un tableau de scores *Scas[]* mémorisant une correspondance entre un identifiant *idj* d'image *j* et son tableau de score particulier *Scjas[].* Ce tableau de scores *Scas[]* peut être traité par l'estimateur 21 pour qu'une seule valeur de score, dite finale, *Scj* soit associée à chacun des identifiants d'image *j*. Un classement des images *j* quant à leur similarité à l'image 1 peut ainsi être obtenu.

Le Demandeur a constaté que les images-résultats retournées par l'interrogateur 19 dans ce mode de réalisation sont encore plus pertinentes, en particulier du fait que des caractéristiques de nature géométrique sont prises en compte dans les comparaisons. Du fait que la comparaison de ces caractéristiques géométriques se limite à l'établissement d'un angle de rotation et d'un facteur d'échelle seulement, l'ensemble du processus de recherche reste en pratique très rapide. Cette comparaison étant obtenue par une simple opération arithmétique sur des valeur quantifiées et mémorisées dans la seconde structure de stockage, elle est peu gourmande en ressources de calcul et rapide. En particulier, la détermination des paramètres d'angle de rotation *DeltaA* et de facteur d'échelle *DeltaS* ne fait pas intervenir les données de vecteur caractéristique pour éviter des calculs trop nombreux qui nuisent à la performance du dispositif 1.

Dans le cas où une structure de listes inversées est utilisée, la comparaison d'images est encore plus rapide.

En particulier, un tableau de scores peut être réalisé pour chacune des entrées de la structure de listes inversées, puis les tableaux de score des descripteurs d'une même image rassemblés en un même tableau. Ceci est encore plus rapide et performant lorsque chaque entrée des listes inversées contient un identifiant d'image. Dans ce cas, chaque image reçoit seulement un score unique pour le premier mode de réalisation de l'interrogateur.

Dans une variante de ce second mode de réalisation, l'interrogateur 19 est agencé de manière à maintenir pour chaque image *j* un tableau de scores d'angle *Sa* et un tableau de score de facteur d'echelle *Ss*, rassemblant respectivement les valeurs de similarité, éventuellement additionées, en fonction des valeurs quantifiées de paramètre de rotation *DeltaA* et de facteur d'échelle *DeltaS* classes d'angle et les scores en fonction des classes de facteur d'échelle.

Dans ce cas, la troisième structure de stockage 20 est simplifiée, et le processus de classement accéléré.

L'estimateur 21 peut être agencé pour attribuer à une image *j* la plus petite valeur des plus grandes valeurs de scores de chacun des tableaux de score d'angle *Sca[]* et de score d'échelle *Scs[]* en tant que valeur de score finale *Scj.*

Lorsqu'une structure de listes inversées est utilisée, chacun de ces vecteurs peut être stocké en liaison avec l'entrée correspondante.

Comme on l'a vu, la seconde structure de stockage 7 est particulièrement compacte lorsqu'elle est réalisée sous la forme de listes inversées.

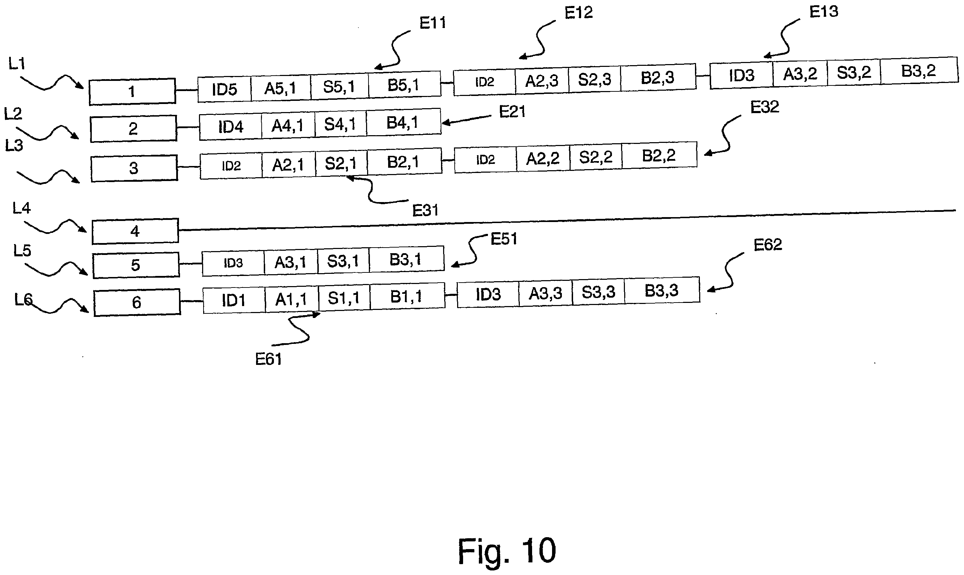

Sur la figure 10, un exemple de réalisation de la seconde structure de stockage 7 sous la forme de listes inversées est représenté.

Chacune des listes L1, L2, ..., L6 est identifiée par une valeur d'index, ici 1, 2,... 6.

Chaque liste *Li*, i = 1, ..., 6, regroupe un certain nombre d'entrées *Eij.* Chaque entrée comporte un identifiant d'image *IDk*, une valeur quantifiée d'angle caractéristique *Ak*,*l*, une valeur quantifiée de facteur d'échelle *Skl* (valeur logarithmique), et une valeur de signature binaire *Bkl.*

Chaque entrée *Eij* est telle qu'un vecteur caractéristique *xlk* de l'image *k* s'est vu attribuer en tant que valeur entière *q(xlk)* le numéro d'index *i* de la liste. En variante, un identifiant de descripteur pourrait être stocké.

Par exemple, l'image identifiée par *ID1* est représentée dans cette seconde structure de stockage 7 par un unique descripteur (une seule entrée dans la structure de listes inversées, référencée E61), auquel a été attribuée la valeur entière 6. Autrement dit, ce descripteur est représenté par sa valeur entière dans la seconde structure de stockage 7.

La troisième image, identifiée *ID3*, est caractérisée dans la première structure de stockage 5 par trois descripteurs (3 entrées comporte l'identifiant *ID3* dans la seconde structure de stockage 7). Ces descripteurs sont respectivement représentés, dans cette structure de listes inversées, par les valeurs entières 1, 5 et 6, comme le montre les entrées E13, E15 et E62.

L'intérêt d'une structure en listes inversées est un stockage particulièrement compact d'une représentation d'un très grand nombre d'images. La quantité de mémoire attribuée à chacune des entrées des listes est réduite autant que possible, tout en conservant un maximum d'informations pour la comparaison de descripteurs entre eux. De bons résultats en termes de compacité et de pertinence des résultats ont été obtenus par le Demandeur avec des entrées agencées comme suit :
- 21 bits mémoire sont réservés à l'identification d'une image *(IDk)*,
- 6 bits mémoire sont réservés au stockage de la valeur quantifiée d'angles caractéristiques *Akl,*
- 5 bits mémoire sont réservés au stockage du logarithme de l'échelle caractéristique *Skl*, et
- 64 bits sont réservés au stockage de la signature binaire *Bkl.*

Dans le premier opérateur 11, la valeur de seuil *ht* et la dimension *db* sont établies de telle manière que la valeur *ht* soit inférieure ou égale à la valeur de la dimension *db.* Cette valeur de seuil *ht* doit être suffisamment élevée pour garantir que les *n* plus proches vecteurs, au sens de la distance euclidienne, d'un vecteur caractéristique *xij* soient déterminés comme étant similaires, c'est-à-dire que le produit scalaire de leur signature binaire doit être inférieur à *ht.* La valeur de seuil *ht* doit, dans le même temps, être basse pour filtrer les nombreux points qui sont disposés dans une partie éloignée de la cellule de Voronoi correspondante. Le choix de la valeur de seuil *ht* résulte donc d'un compromis.

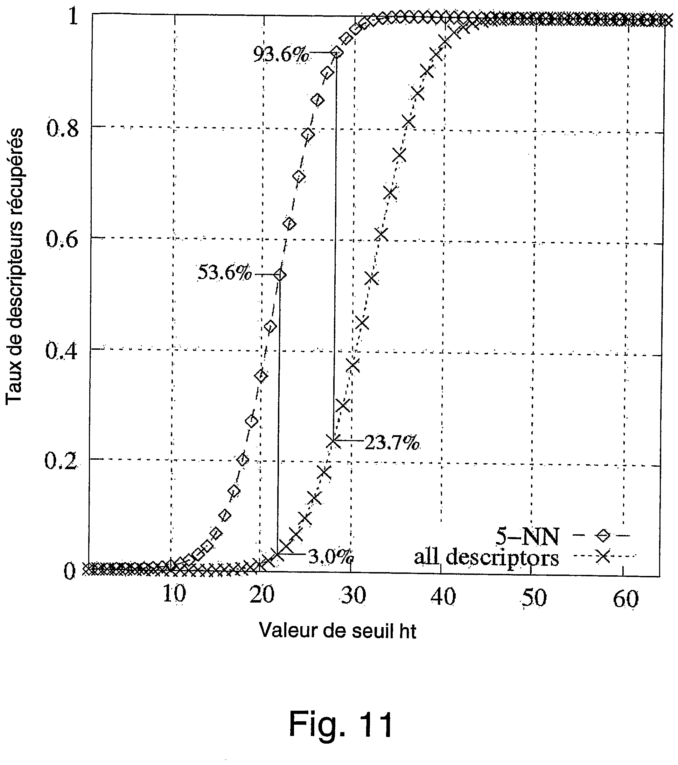

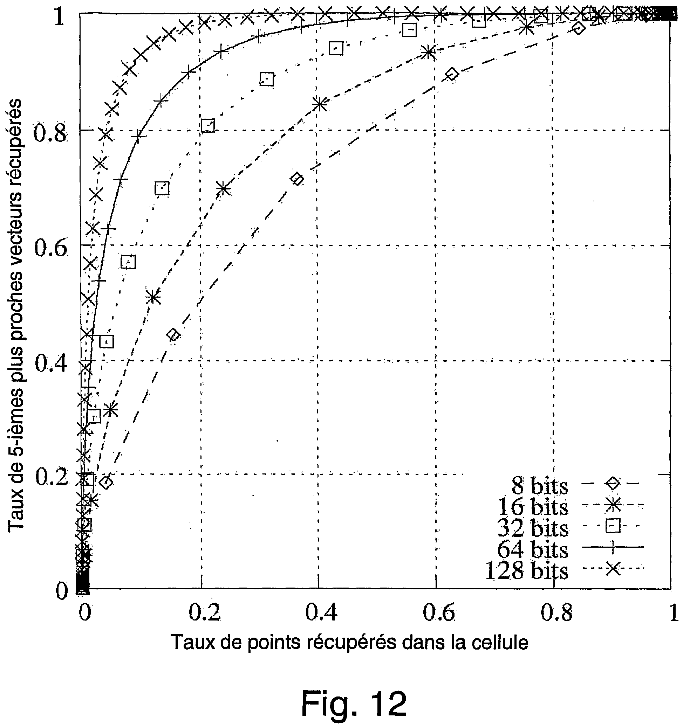

Les représentations graphiques des figures 11 et 12 montrent respectivement le taux de descripteurs récupérés en fonction de la valeur de seuil *ht,* et le taux de 5-ièmes plus proches vecteurs récupérés en fonction du taux de points récupérés dans une cellule.

Le graphique de la figure 11 a été obtenu avec une valeur de dimension *db* fixée à 64. Par taux de descripteur récupérés, on entend respectivement le taux de descripteurs de cellule et le taux de i-èmes plus proches vecteurs, ici 5, qui sont filtrés par le premier opérateur 13.

Les graphiques 11 et 12 ont été générés en analysant un ensemble de descripteurs attribué à un même centroïde. Étant donné un vecteur caractéristique *x*, le taux de descripteurs *m* filtrés par le premier opérateur 13, c'est-à-dire les descripteurs pour lesquels la valeur de similarité *f(x, m)* avec le vecteur x est nulle, est comparé au taux de 5 plus proches vecteurs qui sont récupérés dans une cellule comprenant 1000 descripteurs.

Le graphique de la figure 11 montre que le choix de la valeur de seuil *ht,* ici choisie entre 20 et 30, garantit que la plupart des descripteurs de cellules soient filtrés et que les n plus proches vecteurs de ces descripteurs sont préservés avec une forte probabilité. Une valeur de seuil *ht* fixée à 22 a pour conséquence un filtrage d'environ 97 % des descripteurs tandis que 53 % des cinq plus proches vecteurs sont préservés. Une valeur de seuil *ht* plus élevée, ici fixée à 28, aboutit à une conservation à 94 % des cinq plus proches vecteurs et à un filtrage de 77 % des descripteurs de cellules.

Le graphique de la figure 12 représente l'écart entre les taux de filtrages de ces différents descripteurs pour différentes valeurs dimensions *db.* La meilleure qualité de filtrage est obtenue pour les plus grandes valeurs de dimension *db.* De grandes valeurs de dimension *db* nécessitent un plus grand espace de stockage mémoire. En conséquence, la valeur de la dimension *db* résulte également d'un compromis entre la précision du premier opérateur 13 et la quantité de mémoire utilisée. Une dimension *db* valant 64 semble un bon compromis.

Le dispositif selon l'invention permet la construction d'une base compacte pouvant comporter une représentation d'un très grand nombre d'images, une recherche d'images similaires plus pertinente que les dispositifs de l'état de la technique, prenant en compte des éléments géométriques de ces images, et plus rapide. Ces avantages sont plus particulièrement améliorés lorsque la base en question prend la forme d'une structure de listes inversées.

L'invention n'est pas limitée au mode de réalisation décrit ci-dessus, à titre d'exemples uniquement.

En particulier :
- Les premier, second et troisième opérateurs peuvent être réalisés en un même opérateur présentant les mêmes fonctionnalités.
- Les première, seconde et troisième structures de stockage ont été représentées comme appartenant à une même mémoire 3. Il s'entend que chacune de ces structures peut être localisée ou répartie sur des dispositifs physiquement distincts, voire technologiquement différents. Par exemple la première structure de mémoire peut être agencée sur un disque dur, tandis que la seconde structure de mémoire peut être agencée en mémoire RAM, en particulier lorsqu'elle est réalisée sous la forme d'une structure de listes inversées (compacité).
- Le premier opérateur et les second et troisième opérateurs peuvent être utilisés indépendamment les uns des autres, en particulier dans le second mode de réalisation du premier opérateur.
- L'invention peut également être vue sous la forme de procédés d'aide à la reconnaissance d'images, dont les étapes se trouvent dans les différents modes de réalisation décrits. Ces procédés sont susceptibles de généralisation conformément à l'esprit de cette description.
- Le dispositif de traitement 5 peut être réalisé à l'aide de tous moyens de calculs, en particulier un microprocesseur capable d'exécuter des produits de programmes informatiques.

## Revendications

1. Dispositif d'aide à la reconnaissance d'images, comprenant :
- une mémoire (3) capable de stocker une pluralité de jeux de descripteurs (*dij*), chaque jeu correspondant à une image,
- chaque descripteur (*dij*) étant associé à une zone désignée de l'image, et comprenant de premières données de type vecteur (*xij*), de secondes données de type angle (*aij*), et de troisièmes données de type scalaire (*sij*),
- un premier opérateur (13) capable de recevoir une désignations de deux descripteurs (*dij*) et d'établir un booléen reflétant la vérification d'un critère de similarité des vecteurs de descripteurs (*xij*), à partir d'une comparaison entre les premières données de ces descripteurs,
- un second opérateur (15) capable de recevoir une désignation de deux descripteurs (*dij*) et d'établir un paramètre d'angle de rotation (*DeltaA*) à partir des secondes données (*aij*) respectives des deux descripteurs (dij),
- un troisième opérateur (17) capable de recevoir une désignation de deux descripteurs (*dij*) et d'établir un paramètre de facteur d'échelle (DeltaS) à partir des troisièmes données de ces descripteurs (*sij*),
- un contrôleur (5) capable de recevoir les désignations d'un premier et d'un second jeu de descripteurs (*dij*), et agencé pour appliquer le premier opérateur (13) à chaque couple formé d'un descripteur (*dij*) du premier jeu, et d'un descripteur du second jeu (*dij*), pour en déduire une liste de couples de descripteurs similaires,
- d'appeler le second opérateur (15) et le troisième opérateur (17) pour chacun des couples de descripteurs de ladite liste et stocker en mémoire l'ensemble des paramètres obtenus, et
- un estimateur (21) de la ressemblance entre les images correspondant respectivement au premier et au second jeu de descripteurs (*dij*), à partir d'un traitement statistique sur ledit ensemble de paramètres.

2. Dispositif selon la revendication 1, dans lequel le second opérateur (15) est agencé pour établir le paramètre d'angle de rotation (*DeltaA*) à partir des seules secondes données (*aij*) respectives des deux descripteurs (dij), et dans lequel le troisième opérateur (17) est agencé pour établir un paramètre de facteur d'échelle (*DeltaS*) à partir des seules troisièmes données de ces descripteurs (*sij*).

3. Dispositif selon l'une des revendications 1 et 2, dans lequel la mémoire comprend une structure de stockage spécifique (7) mémorisant une correspondance entre chacun des descripteurs (*dij*) et une donnée particulière d'un ensemble de premières données supplémentaires de type scalaire, sélectionnées suivant une règle prédéterminée à partir des données de vecteur caractéristique (*xij*) du descripteur.

4. Dispositif selon la revendication 3, dans lequel le premier opérateur (13) est agencé pour comparer les premières données des descripteurs (*dij*) désignés au moins en partie sur la base d'une comparaison de ladite donnée particulière (*q(xij)*) correspondant auxdits descripteurs (*dij*)*.*

5. Dispositif selon l'une des revendications 3 et 4, dans lequel la structure de stockage spécifique (7) est agencée pour mémoriser une correspondance entre chacun des descripteurs (*dij*), les données particulières sélectionnées pour le descripteur (*dij*), et une représentation de certaines au moins des secondes (*aij*) et troisièmes (*sij*) données de ce descripteur (*dij*)*.*

6. Dispositif selon la revendication 5, dans lequel l'un au moins du second opérateur (15) et du troisième opérateur (17) est agencé pour établir le paramètre d'angle de rotation (DeltaA) ou le paramètre de facteur d'échelle (DelatS) à partir des représentations des secondes (*aij*) ou troisièmes (*sij*) données dans la structure de mémoire spécifique (7).

7. Dispositif selon l'une des revendications 3 à 6, dans lequel la structure de mémoire spécifique est agencée pour mémoriser une correspondance entre chacune des données particulières de l'ensemble des premières données supplémentaires et une donnée de désignation de chacun des descripteurs (*dij*) pour lequel cette donnée particulière est sélectionnée, ou de désignation de ce jeu de descripteurs.

8. Dispositif selon la revendication 7, dans lequel la structure de mémoire spécifique (7) est agencée sous la forme d'une pluralité de listes (*Li*), chacune de ces listes (*Li*) étant associée à une donnée particulière (*q*) de l'ensemble des premières données supplémentaires (*q*) et comportant en tant qu'entrées (Ekl) lesdites données de désignation.

9. Dispositif selon la revendication 8, dans lequel chacune des entrées comporte encore des données de représentation de certaines au moins des secondes (aij) et troisièmes (sij) données du descripteur (*dij*) désigné.

10. Dispositif selon l'une des revendication 3 à 9, dans lequel l'ensemble des premières données supplémentaires forme un index pour la structure de stockage spécifique.

11. Dispositif selon l'une des revendications précédentes, dans lequel les paramètres obtenus (*DeltaA*, *DeltaS*) sont stockés sous la forme d'un ensemble de couples formés à chaque fois d'une valeur de paramètre de facteur d'échelle et d'une valeur de paramètre d'angle de rotation, la mémoire (3) stockant en outre une correspondance entre chacun des couples ainsi formés et un identifiant du descripteur (*dij*) du second jeu à partir duquel ce couple a été établi, ou un identifiant du jeu de ce descripteur (*dij*).

12. Dispositif selon l'une des revendications 1 à 11, dans lequel les paramètres obtenus sont stockés sous la forme d'ensembles de paramètres d'angle et d'ensembles de paramètres de facteur d'échelle, la mémoire stockant en outre une correspondance entre chacun desdits ensembles et un identifiant du descripteur du second jeu à partir duquel lesdites valeurs ont été établies, ou un identifiant du jeu de ce descripteur (*dij*)*.*

13. Dispositif selon l'une des revendications précédentes, dans lequel les paramètres obtenus sont respectivement associés à des classes de valeurs, et dans lequel l'estimateur (21) établit une mesure de similarité sur la base d'un traitement statistique sur la population de ces classes de valeurs.

14. Dispositif selon la revendication 13, dans lequel le traitement statistique comprend l'application d'un filtre de lissage sur les classes de valeurs, préalablement à l'établissement de la mesure de similarité.

15. Dispositif selon l'une des revendications précédentes, dans lequel ledit traitement statistique comprend l'application d'une fonction de pondération pour certaines valeurs de paramètres d'angle et/ou de paramètres de facteur d'échelle.

16. Dispositif selon l'une des revendications précédentes, dans lequel la mémoire 3 stocke une correspondance entre une désignation de chacun des descripteurs (*dij*) et une valeur entière (*q(xij)*) sélectionnée pour ce descripteur (*dij*) parmi un groupe déterminé de valeurs entières à partir des premières données (*xij*), et dans lequel ledit premier opérateur (13) est agencé de sorte que le critère de similarité des vecteurs de descripteurs comprenne l'identité des valeurs entières attribuées.

17. Dispositif selon l'une des revendications précédentes, comprenant un dispositif de signature, capable de recevoir un descripteur (*dij*), d'établir de quatrièmes données de type signature binaire multidimensionnelle, à partir des premières données du descripteur (*xij*), la mémoire (3) étant agencé pour maintenir une correspondance entre un identifiant de chacun des descripteurs, ou un identifiant du jeu de ce descripteur, et les quatrièmes données établies pour ce descripteur (*dij*).

18. Dispositif selon la revendication 17 rattachée à la revendication 8, dans lequel chaque entrée de la liste (il) comporte en outre les données de signature binaire.

19. Dispositif selon l'une des revendications 17 et 18, dans lequel le premier opérateur (13) est agencé pour obtenir les signatures binaires correspondant aux deux descripteurs (*dij*), et établir une mesure de distance à partir de ces signatures binaires, et dans lequel le premier opérateur (13) est agencé de sorte que ledit critère de similarité des vecteurs de descripteurs comprend en outre le fait que la mesure de distance obtenue soit inférieure à une première valeur seuil (*ht*) déterminée.

20. Dispositif selon l'une des revendications 17 à 19, dans lequel le dispositif de signature (11) est agencé pour :
- établir de cinquièmes données de type vecteur, à partir d'une matrice de projection (*P*) déterminée et du vecteur du descripteur (*xij*),
- comparer la valeurs de chacune des composantes du vecteur projeté à une seconde valeur de seuil (*Tq(xij)*) déterminée,
- établir en tant que signature binaire un ensemble formé de booléens, chaque booléen reflétant le résultat de la comparaison pour une composante du vecteur projeté.

21. Dispositif selon l'une des revendications précédentes, dans lequel l'ensemble des descripteurs présents dans la mémoire (3) sont stockés sous la forme d'une structure de listes inversées.

## Patentansprüche

1. Bilderkennungshilfsvorrichtung, umfassend:
- einen Speicher (3), der in der Lage ist, eine Mehrzahl von Deskriptorsätzen (*dij*) zu speichern, wobei jeder Satz einem Bild entspricht,
- wobei jeder Deskriptor (*dij*) einem bezeichneten Bereich des Bildes zugeordnet ist und erste Daten einer Vektorart (*xij*), zweite Daten einer Winkelart (*aij*) und dritte Daten einer Skalarart (*sij*) umfasst,
- einen ersten Operator (13), der in der Lage ist, Bezeichnungen von zwei Deskriptoren (*dij*) zu empfangen und eine Boolsche Variable zu erstellen, die die Überprüfung eines Ähnlichkeitskriteriums der Deskriptorvektoren (*xij*) basierend auf einem Vergleich zwischen den ersten Daten dieser Deskriptoren widerspiegelt,
- einen zweiten Operator (15), der in der Lage ist, eine Bezeichnung von zwei Deskriptoren (*dij*) zu empfangen und einen Drehwinkelparameter (*DeltaA*) basierend auf den jeweiligen zweiten Daten (*aij*) der zwei Deskriptoren (dij) zu erstellen,
- einen dritten Operator (17), der in der Lage ist, eine Bezeichnung von zwei Deskriptoren (*dij*) zu empfangen und einen Skalierungsfaktorparameter (DeltaS) basierend auf den dritten Daten dieser Deskriptoren (*sij*) zu erstellen,
- eine Steuerung (5), die in der Lage ist, die Bezeichnungen eines ersten und eines zweiten Satzes von Deskriptoren (*dij*) zu empfangen, und die angeordnet ist, um den ersten Operator (13) auf jedes Paar anzuwenden, das durch einen Deskriptor (*dij*) des ersten Satzes und einen Deskriptor des zweiten Satzes (*dij*) gebildet wird, um daraus eine Liste ähnlicher Deskriptorenpaare abzuleiten,
- Aufrufen des zweiten Operators (15) und des dritten Operators (17) für jedes der Deskriptorenpaare der Liste und Speichern der Gesamtheit der erhaltenen Parameter im Speicher und
- eine Schätzfunktion (21) der Ähnlichkeit zwischen den Bildern, die jeweils dem ersten und zweiten Satz von Deskriptoren (*dij*) entsprechen, basierend auf einer statistischen Verarbeitung an der Gesamtheit von Parametern.

2. Vorrichtung nach Anspruch 1, wobei der zweite Operator (15) angeordnet ist, um den Drehwinkelparameter (*DeltaA*) basierend auf allein den jeweiligen zweiten Daten (*aij*) der beiden Deskriptoren (dij) zu bestimmen, und wobei der dritte Operator (17) angeordnet ist, um einen Skalierungsfaktorparameter (*DeltaS*) basierend auf allein den dritten Daten dieser Deskriptoren (*sij*) zu erstellen.

3. Vorrichtung nach einem der Ansprüche 1 und 2, wobei der Speicher eine spezifische Speicherstruktur (7) umfasst, die eine Übereinstimmung zwischen jedem der Deskriptoren (*dij*) und spezieller Daten einer Gesamtheit erster zusätzlicher Daten der Skalarart speichert, die nach einer vorher festgelegten Regel basierend auf den charakteristischen Vektordaten (*xij*) des Deskriptors ausgewählt werden.

4. Vorrichtung nach Anspruch 3, wobei der erste Operator (13) angeordnet ist, um die ersten Daten der bezeichneten Deskriptoren (*dij*) zumindest teilweise auf der Grundlage eines Vergleichs der speziellen Daten (*q(xij)*) zu vergleichen, die den Deskriptoren (*dij*) entsprechen.

5. Vorrichtung nach einem der Ansprüche 3 und 4, wobei die spezifische Speicherstruktur (7) angeordnet ist, um eine Übereinstimmung zwischen jedem der Deskriptoren (*dij*), den für den Deskriptor (*dij*) ausgewählten speziellen Daten und einer Darstellung von bestimmten, mindestens der zweiten (*aij*) und dritten, Daten (*sij*) dieses Deskriptors (*dij*) zu speichern.

6. Vorrichtung nach Anspruch 5, wobei mindestens einer des zweiten Operators (15) und des dritten Operators (17) angeordnet ist, um den Drehwinkelparameter (DeltaA) oder den Skalierungsfaktorparameter (DelatS) basierend auf den Darstellungen der zweiten (*aij*) oder dritten (*sij*) Daten in der spezifischen Speicherstruktur (7) zu erstellen.

7. Vorrichtung nach einem der Ansprüche 3 bis 6, wobei die spezifische Speicherstruktur angeordnet ist, um eine Übereinstimmung zwischen jeden der speziellen Daten der Gesamtheit der ersten zusätzlichen Datenmenge und den Bezeichnungsdaten eines jeden der Deskriptoren (*dij*), für den diese speziellen Daten ausgewählt sind, oder den Bezeichnungsdaten dieses Satzes von Deskriptoren, zu speichern.

8. Vorrichtung nach Anspruch 7, wobei die spezifische Speicherstruktur (7) in Form einer Mehrzahl von Listen (*Li*) angeordnet ist, wobei jede dieser Listen (*Li*) einer speziellen Datenmenge (q) der Gesamtheit erster Zusatzdaten (*q*) zugeordnet ist und als Eingaben (Ekl) die Bezeichnungsdaten umfasst.

9. Vorrichtung nach Anspruch 8, wobei jeder der Einträge noch Darstellungsdaten bestimmter, mindestens der zweiten (aij) und dritten (sij), Daten des bezeichneten Deskriptors (*dij*) umfasst.

10. Vorrichtung nach einem der Ansprüche 3 bis 9, wobei die Gesamtheit der ersten zusätzlichen Daten einen Index für die spezifische Speicherstruktur bildet.

11. Vorrichtung nach einem der vorhergehenden Ansprüche, wobei die erhaltenen Parameter (*DeltaA, DeltaS*) in der Form einer Gesamtheit von Paaren gespeichert werden, die jedes Mal von einem Skalenfaktorparameterwert und einem Drehwinkelparameterwert gebildet werden, wobei der Speicher (3) ferner eine Übereinstimmung zwischen jedem der so gebildeten Paare und einem Identifikator des Deskriptors (*dij*) des zweiten Satzes, basierend auf welchem dieses Paar erstellt wurde, oder einem Identifikator des Satzes dieses Deskriptors (*dij*) speichert.

12. Vorrichtung nach einem der Ansprüche 1 bis 11, wobei die erhaltenen Parameter in der Form von Gesamtheiten von Winkelparametern und Gesamtheiten von Skalierungsfaktorparametern gespeichert werden, wobei der Speicher ferner eine Übereinstimmung zwischen jeder der Gesamtheiten und einem Identifikator des Deskriptors des zweiten Satzes, basierend auf welchem die Werte erstellt wurden, oder einem Identifikator des Satzes dieses Deskriptors (*dij*) speichert.

13. Vorrichtung nach einem der vorhergehenden Ansprüche, wobei die erhaltenen Parameter jeweils Werteklassen zugeordnet sind, und wobei die Schätzfunktion (21) ein Ähnlichkeitsmaß auf der Grundlage einer statistischen Verarbeitung der Population dieser Werteklassen erstellt.

14. Vorrichtung nach Anspruch 13, wobei die statistische Verarbeitung vor dem Erstellen des Ähnlichkeitsmaßes das Anwenden eines Glättungsfilters auf die Werteklassen umfasst.

15. Vorrichtung nach einem der vorhergehenden Ansprüche, wobei die statistische Verarbeitung die Anwendung einer Gewichtungsfunktion für bestimmte Werte von Winkelparametern und/oder Skalenfaktorparametern umfasst.

16. Vorrichtung nach einem der vorhergehenden Ansprüche, wobei der Speicher 3 eine Übereinstimmung zwischen einer Bezeichnung eines jeden der Deskriptoren (*dij*) und einem für diesen Deskriptor (*dij*) ausgewählten ganzzahligen Wert (*q(xij)*) basierend auf einer festgelegten Gruppe von ganzzahligen Werten aus den ersten Daten (*xij*) speichert, und wobei der erste Operator (13) so angeordnet ist, dass das Ähnlichkeitskriterium der Deskriptorvektoren die Identität der zugeordneten ganzzahligen Werte umfasst.

17. Vorrichtung nach einem der vorhergehenden Ansprüche, umfassend eine Signaturvorrichtung, die in der Lage ist, einen Deskriptor (*dij*) aufzunehmen, vierte binäre mehrdimensionale Daten der Signaturart basierend auf den ersten Daten des Deskriptors (*xij*) zu erstellen, wobei der Speicher (3) so angeordnet ist, um eine Übereinstimmung zwischen einem Identifikator eines jeden der Deskriptoren oder einem Identifikator des Satzes dieses Deskriptors und den für diesen Deskriptor (*dij*) erstellten vierten Daten aufrechtzuerhalten.

18. Vorrichtung nach Anspruch 17 in Verbindung mit Anspruch 8, wobei jeder Eintrag in der Liste (il) ferner binäre Signaturdaten umfasst.

19. Vorrichtung nach einem der Ansprüche 17 und 18, wobei der erste Operator (13) angeordnet ist, um binäre Signaturen zu erhalten, die den zwei Deskriptoren (*dij*) entsprechen, und um ein Abstandsmaß basierend auf diesen binären Signaturen zu erstellen, und wobei der erste Operator (13) so angeordnet ist, dass das Kriterium der Ähnlichkeit der Deskriptorvektoren ferner die Tatsache umfasst, dass das erhaltene Abstandsmaß kleiner ist als ein erster festgelegter Schwellenwert (*ht*).

20. Vorrichtung nach einem der Ansprüche 17 bis 19, wobei die Signaturvorrichtung (11) angeordnet ist zum:
- Bestimmen von fünften Daten der Vektorart basierend auf einer festgelegten Projektionsmatrix (P) und dem Vektor des Deskriptors (*xij*),
- Vergleichen der Werte von jeder der Komponenten des projizierten Vektors mit einem zweiten festgelegten Schwellenwert (*Tq(xij)*),
- Erstellen einer von Boolschen Variablen gebildeten Gesamtheit als binäre Signatur, wobei jede Boolsche Variable das Ergebnis des Vergleichs für eine Komponente des projizierten Vektors widerspiegelt.

21. Vorrichtung nach einem der vorhergehenden Ansprüche, wobei die Gesamtheit der in dem Speicher (3) vorhandenen Deskriptoren in Form einer invertierten Listenstruktur gespeichert ist.

## Claims

1. An assistance device for image recognition, comprising:
- a memory (3) capable of storing a plurality of sets of descriptors *(dij),* each set corresponding to an image,
- each descriptor *(dij)* being associated with a designated area of the image, and comprising first data of the vector type *(xij),* second data of the angle type *(aij),* and third data of the scalar type *(sij),*
- a first operator (13) capable of receiving a designation of two descriptors *(dij)* and of establishing a Boolean variable reflecting the verification of a similarity criterion of the descriptor vectors *(xij),* from a comparison between the first data of these descriptors,
- a second operator (15) capable of receiving a designation of two descriptors *(dij)* and of establishing a rotation angle parameter *(DeltaA)* from the second respective data *(aij)* of both descriptors *(dij),*
- a third operator (17) capable of receiving a designation of two descriptors *(dij)* and of establishing a scale factor parameter *(DeltaS)* from the third data of these descriptors *(sij),*
- a controller (5) capable of receiving the designations of a first and of a second set of descriptors *(dij),* and laid out so as to apply the first operator (13) to each pair formed by a descriptor *(dij)* of the first set, and by a descriptor of the second set *(dij),* in order to infer therefrom a list of pairs of similar descriptors,
- calling the second operator (15) and the third operator (17) for each of the pairs of descriptors of said list and storing in memory the whole of the obtained parameters, and
- an estimator (21) of the likeness between the images respectively corresponding to the first and to the second set of descriptors *(dij),* from statistical processing on said set of parameters.

2. The device according to claim 1, wherein the second operator (15) is laid out so as to establish the rotation angle parameter *(DeltaA)* from the sole respective second data *(aij)* of both descriptors *(dij),* and wherein the third operator (17) is laid out so as to establish a scale factor parameter *(DeltaS)* from the sole third data of these descriptors *(sij)*.

3. The device according to any of claims 1 and 2, wherein the memory comprises a specific storage structure (7) storing in memory a matching relationship between each of the descriptors *(dij)* and a particular datum of a set of additional first data of the scalar type, selected according to a predetermined rule from the characteristic vector data *(xij)* of the descriptor.

4. The device according to claim 3, wherein the first operator (13) is laid out so as to compare the first data of the descriptors *(dij)* at least partly designated on the basis of a comparison of said particular datum *(q(xij))* corresponding to said descriptors *(dij).*

5. The device according to any of claims 3 and 4, wherein the specific storage structure (7) is laid out so as to store in memory a matching relationship between each of the descriptors *(dij),* the particular data selected for the descriptor *(dij),* and a representation of at least some of the second *(aij)* and third *(sij)* data of this descriptor *(dij).*

6. The device according to claim 5, wherein at least one of the second operator (15) or of the third operator (17) is laid out so as to establish the rotation angle parameter *(DeltaA)* or the scale factor parameter *(DeltaS)* from the representations of the second *(aij)* or third *(sij)* data in the specific memory structure (7).

7. The device according to any of claims 3 to 6, wherein the specific memory structure is laid out so as to store in memory a matching relationship between each of the particular data of the set of the first additional data and a designation datum of each of the descriptors *(dij)* for which this particular datum is selected, or a designation datum of this set of descriptors.

8. The device according to claim 7, wherein the specific memory structure (7) is laid out as a plurality of lists *(Li),* each of these lists *(Li)* being associated with a particular datum *(q)* of the set of the first additional data *(q)* and including said designation data as entries *(Ek1).*

9. The device according to claim 8, wherein each of the entries further includes representation data of at least some of the second *(aij)* and third *(sij)* data of the designated descriptor *(dij).*

10. The device according to any of claims 3 to 9, wherein the set of first additional data forms an index for the specific storage structure.

11. The device according to any of the preceding claims, wherein the obtained parameters *(DeltaA, DeltaS)* are stored as a set of pairs formed every time with a scale factor parameter value and a rotation angle parameter value, the memory (3) further storing a matching relationship between each of the thereby formed pairs and an identifier of the descriptor *(dij)* of the second set from which this pair was established, or an identifier of the set of this descriptor *(dij).*

12. The device according to any of claims 1 to 11, wherein the obtained parameters are stored as sets of angle parameters and sets of scale factor parameters, the memory further storing a matching relationship between each of said sets and an identifier of the descriptor of the second set from which said values have been established, or an identifier of the set of this descriptor *(dij).*

13. The device according to any of the preceding claims, wherein the obtained parameters are respectively associated with classes of values, and wherein the estimator (21) establishes a similarity measurement on the basis of statistical processing on the population of these classes of values.

14. The device according to claim 13, wherein the statistical processing comprises the application of a smoothing filter on the classes of values, prior to establishing the similarity measurement.

15. The device according to any of the preceding claims, wherein said statistical processing comprises the application of a weighting function for certain values of angle parameters and/or of scale factor parameters.

16. The device according to any of the preceding claims, wherein the memory 3 stores a matching relationship between a designation of each of the descriptors *(dij)* and an integer value *(q(xij))* selected for this descriptor *(dij)* from a determined group of integer values from first data *(xij),* and wherein said operator (13) is laid out so that the similarity criterion of the vectors of descriptors comprises the identity of the assigned integer values.

17. The device according to any of the preceding claims, comprising a signature device, capable of receiving a descriptor *(dij),* establishing fourth data of the multidimensional binary signature type, from the first data of the descriptor *(xij),* the memory (3) being laid out so as to maintain a matching relationship between an identifier of each of the descriptors, or an identifier of the set of this descriptor, and the fourth data established for this descriptor *(dij).*

18. The device according to claim 17 related to claim 8, wherein each entry of the list (il) further includes binary signature data.

19. The device according to any of claims 17 and 18, wherein the first operator (13) is laid out so as to obtain the binary signatures corresponding to both descriptors *(dij),* and establishing a distance measurement from these binary signatures, and wherein the first operator (13) is laid out so that said similarity criterion of the vectors of descriptors further comprises the fact that the obtained distance measurement is less than a first determined threshold value *(ht).*

20. The device according to any of claims 17 to 19, wherein the signature device (11) is laid out for:
- establishing fifth data of the vector type, from a determined projection matrix *(P)* and from the vector of the descriptor *(xij),*
- comparing the values of each of the components of the projected vector with a determined second threshold value *(Tq(xij)),*
- establishing as a binary signature a set formed of Boolean variables, each Boolean variable reflecting the result of the comparison for a component of the projected vector.

21. The device according to any of the preceding claims, wherein the whole of the descriptors present in the memory (3) are stored as a structure of inverted lists.
